# EUROPEAN PATENT SPECIFICATION

(11) **EP 4 070 902 B1**
(45) Date of publication and mention of the grant of the patent: **15.04.2026**
(21) Application number: 21167588.9
(22) Date of filing: 09.04.2021
(51) Int. Cl.: B23K 1/00, B23K 3/03, B23K 101/26, B23K 101/38, B23K 103/22

(54) **METHOD AND APPARATUS FOR A MARTENSITE-FREE BRAZING PROCESS**
VERFAHREN UND VORRICHTUNG FÜR EIN MARTENSITFREIES LÖTVERFAHREN
PROCÉDÉ ET APPAREIL POUR UN PROCESSUS DE BRASAGE SANS MARTENSITE

(43) Date of publication of application: 12.10.2022
(73) Proprietor: Safetrack Infrasystems Sisab Ab, 245 93 Staffanstorp (SE)
(72) Inventor: Svensson, Bo, 247 96 Veberöd (SE)
(74) Representative: Hansson Thyresson AB

(56) References cited:
- US-A- 2 297 303
- US-A1- 2002 173 207
- US-A1- 2002 190 097
- US-A1- 2007 187 459
- US-A1- 2020 016 674

## Description

The present invention relates to an improved method for brazing for example a connecting piece of electrically conducting material, for example of metal, to a metal surface by means of an improved type of temperature-controlled brazing, and more particularly to a method and an apparatus for brazing an electrically conducting connecting piece of an electrically conducting material to a workpiece of electrically conducting material, see claim 1 and 6.

### BACKGROUND

Temperature controlled brazing methods exist, whereby for certain types of material, for example steel, a martensite-free brazing can be obtained, i.e., brazing is effected without any deleterious structural changes (martensite formation) in the workpiece. A brazed joint is obtained with the part of the workpiece underneath the brazed joint being more or less free of martensite formation in for example railway track (rails), piping/pipelines, and wind power installations. The present invention relates to an improved method and an apparatus for carrying out the improved method.

Developments in railway traffic involve ever higher speeds and heavier axle loads. This in turn places increasing demands on the strength of railway track and its ability to withstand wear, and accordingly rails are manufactured from higher-alloyed steel in order to meet these more stringent requirements. The material from which rails are manufactured is sensitive to thermal influences that can cause structural changes known as martensite formation (hardening effect).

Martensite formation may lead to crack formation in the rail material and due to the higher loads, the rail may fracture, with catastrophic consequences for railway traffic.

Consequently, it is very important to braze signal- and other wiring and cabling firmly to the rail by using a method that does not cause martensite formation in the rail.

Prior art in this field includes GB2376202 B, which discloses a method and an arrangement for a martensite-free brazing process.

US 2002/190097 A1 discloses a method for brazing a connecting piece to a metal surface.

### SUMMARY OF THE INVENTION

The invention is defined by the appended independent claims 1 and 6 for the respective method and apparatus. Additional preferred features are defined by the dependent claims. These and other features of the described technologies will become more fully apparent from the following description and appended claims.

The most serious problem in current methods employed on railway track is the large amount of heat that is produced underneath the brazing joint, which is caused by the electric arc that is generated in the brazing process and produces a deleterious structural change or martensite formation.

The present invention involves a special shape of an electrode used in the process, and further means for controlling an electrical voltage and an electrical current used in the process. Advantages of the method includes lower heat generation, lower power consumption, and an ability to conveniently braze connecting pieces for larger electrical conductor cross section areas than known technology. It is practically impossible today with known brazing technology to connect large cables, i.e., with cable cross section area larger than about 25-35 square millimetres, without significant martensite formation. Test of the new proposed method involving conductor cross section area of 120 square millimetres shows good results with none or only minimal martensite formation after brazing.

The present invention relates to a new method of temperature-controlled brazing together with an arrangement for carrying out the said method in which the problem of martensite formation, and at the same time power consumption, and heat production are reduced Further, the new method facilitates brazing of cable shoes for larger cross-sectional areas of the conducting wires involved.

An object of the present invention is to generate an electric arc via a carbon electrode so as to produce a brazed joint of a workpiece to a rail without the electric arc coming into direct contact with the rail and producing a connection of equal or better quality compared to prior art, but with less power consumption and less heat production.

A further object is to facilitate brazing of larger area electrical conductors than prior art allows.

In embodiments of the invention the carbon electrode itself constitutes an electrical resistance in the brazing process and the length, diameter and shape of the carbon electrode influence the electrical resistance in the process and consequently also influence the current intensity and voltage in the brazing process.

The carbon electrode provides an optimum control over the arc length during the brazing process since the carbon material has good refractory properties, whereas a metal electrode melts. Consequently, the carbon electrode undergoes a negligible change in length, during the brazing process as compared with a melting metal brazing pin.

Yet another object of the present brazing process as applied to the fixing of a cable shoe or other electrically conducting contact connection to a steel rail, is to prevent the electric arc coming into direct contact with the workpiece, which object is achieved if the electrically conducting contact connection consists of a solid plate of compact, electrically conducting material, for example copper. The brazing process, in this context, does not involve flux material or brazing material from any brazing pin forming an electrode. The brazing material does not have to flow through the cable shoe to the underlying workpiece (rail). Due to the construction of the cable shoe, flux material and brazing material are situated underneath the electrical contact connection or cable shoe itself. The whole plate of compact, electrically conducting material, for example copper, forms a buffer that prevents too high a temperature influencing for example the rail and leading to martensite formation. Furthermore, the electrode is not finally forced downwardly into the brazing and there is no risk of adversely affecting the brazed joint.

Another object of the present invention is to control the current intensity during the process. Raising the electrode increases the arc length. This in tum leads to a large voltage drop over the arc and to a reduced current intensity in the electrical circuit. The arc length cannot be increased completely arbitrarily since after a certain length the arc collapses due to the fact that the resistance becomes too great. A small interspacing between the electrode and workpiece, the so-called lifting height, reliably prevents the arc being extinguished during the brazing process. It is very advantageous to have a low current intensity during the process since this prevents martensite formation.

In the present invention it is preferred to use a guard ring of ceramics, but a guard ring consisting of a combination of both metal and ceramics materials may also be preferred since a combination effect increases the protection conferred on the brazing gun.

From the point of view of energy consumption, the material and design of the guard ring play an important role. The guard ring of embodiments of the present invention have been designed with a larger diameter to avoid to high temperatures of the guard ring and also with the advantage of being able to accommodate a larger volume of hot gases.

The guard ring together with the gripping sleeve also prevent the operator from coming into contact with the arc itself or with the hot gases that are formed. This reduces the need for protective equipment for the operator. This also eliminates the risk to the operator of eye injury and others who happen to look towards the arc during the brazing process.

To further tailor heating, a process having three or more distinct periods of different supply of heating may be provided. The process may for example have four periods or steps; Step 1 fast heating, Step 2 slow heating, Step 3 keeping the temperature, Step 4 slow cooldown. The apparatus may still further be provided with input organs to set appropriate parameters for the electrical cross section area of the conductor to be brazed, and wherein the processor is configured to calculate time and voltage for the brazing, taking into account the parameters to provide appropriate voltage and time to accomplish a suitable amount of heat during an appropriate length of time.

This will have the advantage of a more precise tailoring of the brazing as regards e.g. times and temperatures.

There is also disclosed an embodiment useful for understanding the invention including a cable shoe for a martensite free brazing, wherein a front portion is formed as a compact plate configured to be brazed into contact with a workpiece, a back end is formed to define a cable cavity for a cable, and wherein the cable shoe is further designed such that the cable cavity is extending into a tapering cavity, designed to give the cable shoe a uniform cross section area along its length from the compact plate to the beginning of the cable cavity. Tests have shown advantageously that cable shoes provided with the extended cavity, reduces the power needed to perform the brazing process. Further, the compact plate of the front portion may be provided with brazing material, such as an amount of silver alloy with or without flux material, that preferably is attached to the compact plate by pressing or by melting. Particularly advantageous is to manufacture the cable shoe by pressing a brazing clip comprising the silver alloy towards the compact plate, thereby attaching it to the compact plate.

### DRAWINGS

Embodiments of the present invention are described below in more detail with reference to the accompanying drawings, in which;
Fig. 1A shows diagrammatically an outline of the brazing process;
Fig. 1B shows a detail of Fig. 1A.
Fig. 1C shows schematically directions of movement of ions and electrons of the brazing arc;
Fig. 1D shows schematically directions of movement of ions and electrons of the brazing arc, with reversed polarity compared to Fig. 1C.;
Fig. 2 is a partial side view of a brazing gun embodying the invention;
Fig. 3 shows the brazing gun viewed in cross-section on the line III-III in Fig.4A;
Figs. 4A, 4B and 4C are side views of the brazing gun, partly in longitudinal (axial) section;
Fig. 5 shows a brazing operation on a rail;
Fig. 6 shows a brazing operation on a pipeline section;
Fig. 7 illustrates a brazed joint between the outer and inner wheel rims of a railway carriage;
Fig. 8 shows an electrically conducting connecting piece in the form of a cable shoe seen from the side;
Fig. 9 is also a side view of a cable shoe;
Fig. 10A shows a cable shoe seen from above;
Fig. 10B is a view of the cable shoe of Fig. 10A seen from behind;
Fig. 10 C is a side view of the cable shoe of Fig. 10A
Fig. 10 D is a front view of the cable shoe of Fig. 10A
Fig. 11 is a voltage/current/temperature diagram of a brazing process according to prior art;
Fig. 12A is a voltage/current/temperature diagram of a brazing process according to a new method applied to a first cross section area
Fig. 12B is a current/voltage/temperature diagram of a brazing process according to a new method applied to a second cross section area
Fig. 13 is a front view of a principal input panel for entering brazing parameter(s).
Fig. 14A is a control and regulation flow chart of the brazing process;
Fig. 14 B is a flow diagram over method steps;
Fig. 15A is a partial view of the front part of the brazing gun, partly in longitudinal (axial) section.
Fig. 15B, C, D are side views of carbon electrodes of embodiments of the present invention.
Fig. 15 E is a top view of a circular cross section electrode and below a top view of a quadratic cross section electrode.

### DETAILED DESCRIPTION

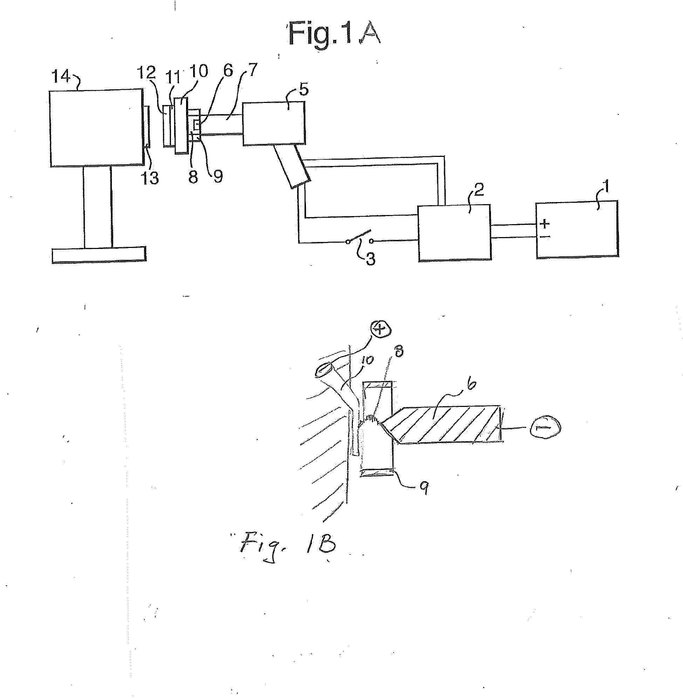

Fig. 1A illustrates diagrammatically the necessary components and the procedure of the brazing process per se, according to the embodiment concerned, the power source that is normally used being a battery 1 from which the current is conducted to an electronics unit 2. The electronics unit 2 being configured to process data received from the brazing gun 5 via its power supply cable and signal cable as well as data from the external power source. The electronics unit 2 being configured to process all information and to regulate the current and voltage supply to the brazing gun 5, for example by regulating the voltage level electronically. By said regulation, the time and current consumption can be controlled during the brazing process and in this way a satisfactory brazing can be achieved, with minimal energy consumption, also combined with a control of the temperature in the base material/workpiece.

When the circuit breaker 3 closes the electrical circuit comprising a lifting magnet in the brazing gun 5, the carbon electrode 6 that is situated in the electrode holder 7 initially short-circuits the circuit with the cable shoe 10, so that when subsequently the electromagnet lifts the carbon electrode 6 from the cable shoe 10 to light an electric arc 8 that is protected by one or more guard rings 9, it operates on a compact flat surface of a cable shoe 10, the cable shoe forming one pole and the carbon electrode 6 forming the other pole. Heat is transmitted via the cable shoe 10 and activates the flux material between the cable shoe 10 and a brazing material 12 and prepares and cleans the surface for a brazing between the brazing material 12 and cable shoe 10, and when the brazing material 12 heats up it activates the flux material 13 on the workpiece 14 and a brazed joint is formed by the brazing material 12 on the workpiece 14. Consequently, the cable shoe 10 is brazed firmly to the workpiece 14 without the electric arc 18 coming into direct contact with the said workpiece 14.

Furthermore, no undesired sparks/arcs are produced between the workpiece 14 and the cable shoe 10 since the electrical circuit is formed via a cable of the cable shoe 10 or via the guard ring 9, and not via the workpiece 14 per se.

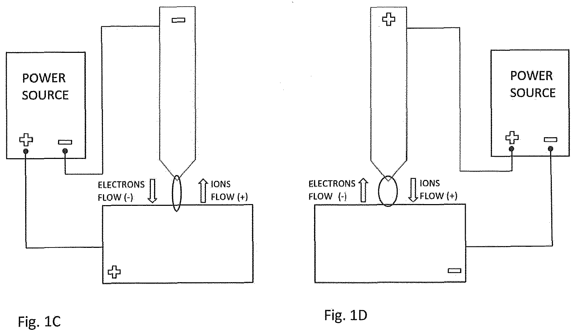

In the new brazing process the whole plate of compact, electrically conducting material, for example copper, forms a buffer that prevents high temperatures affecting for example the rail and leading to martensite formation. Cupper particles will be emitted from the plate of the cable shoe during the brazing process and will be deposited in the form of a thin layer on the carbon electrode, see Fig. 1C. A small cavity may form in the cable shoe 10 during the brazing process. The cable shoe may be configured to allow for this cavity forming, without compromising the mechanical strength of the cable shoe to any significant level.

Fig. 1D shows schematically directions of movement of ions and electrons of the brazing arc, with reversed polarity compared to Fig. 1C. The oval area is showing the width of the arc, suggesting that a thinner, more focussed arc is achieved using a polarity corresponding to a negative carbon electrode, Fig. 1C, and a wider or blurrier arc will result from connecting the carbon electrode to a positive polarity. Tests have shown that the choice of negative polarity of the carbon electrode reduces the energy needed to perform a brazing. The energy reduction is approximately around 30%.

From an energy point of view the guard ring, has an important role during the brazing process. The guard ring 9 is formed so that it exhibits a good thermally insulating function. The guard ring 9 may be formed of a ceramic material, and provided with a toothed lower edge. In this case the hot gases that are formed during the brazing process are discharged radially. When the guard ring is formed of metal, with a smooth lower surface, the gases will leave the guard ring in the axial direction and therefore more heat will be transmitted to the guard ring 9. The guard ring 9 retains its shape and function and is stable during the whole brazing process. The heat that is absorbed by the guard ring is conducted to the cable shoe 10. The result is that less electrical energy and/or power is consumed during the brazing process and a martensite-free brazing takes place.

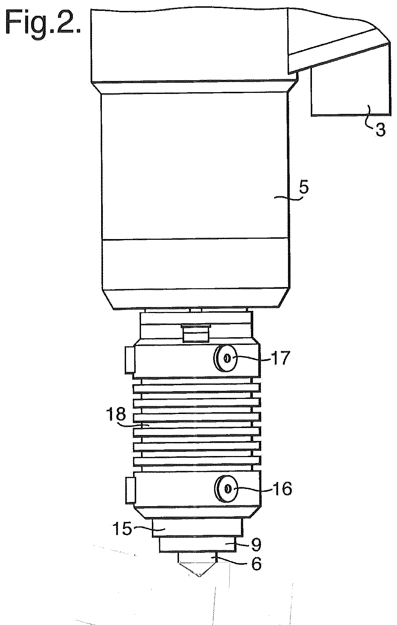

Fig. 2 is a side view of the brazing gun 5, at the front of which can be seen the carbon electrode 6. Before starting the brazing process, the gun 5 together with the carbon electrode 6 is pressed down against the cable shoe 10, whereby the carbon electrode 6 being pressed flush with the lower edge of the guard ring 9. The guard ring 9 is secured in a ring holder 15. When the circuit breaker or start button 3 is pressed, the circuit is shortcircuited, following which the lifting magnet raises the electrode 6 a certain height over the electrically conducting connecting piece 10 and an arc 8 is struck. The guard ring 9 and a gripping sleeve 18 shield the operator from the process. The figure also shows a screw 16 for ejecting the guard ring and a screw 17 for ejecting the electrode. During the brazing process the guard ring 9 can act as a terminal in a grounding operation, if manufactured of metal or other electrically conducting material.

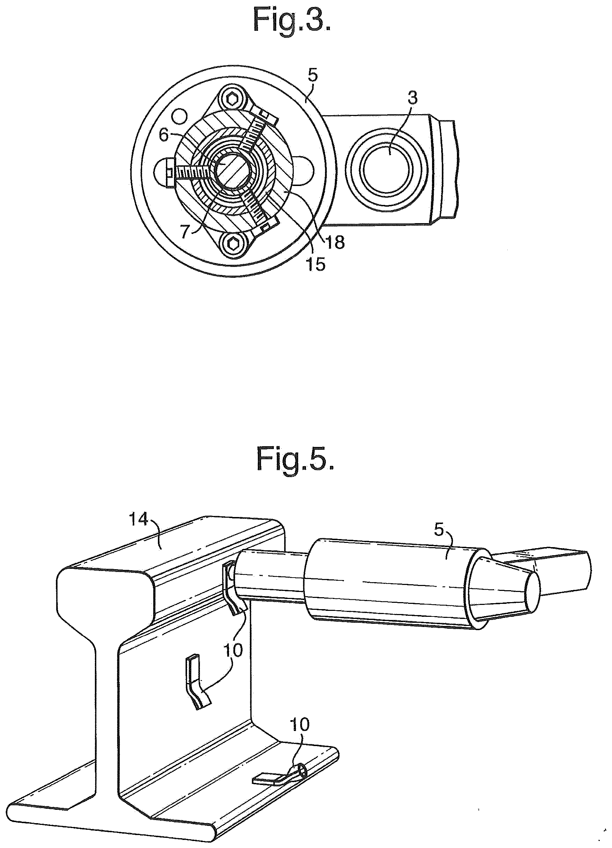

Fig. 3 shows a section of the brazing gun 5 seen from the front, in which the circuit breaker 3 can be seen and in the centre of the mouth of the gun is located the carbon electrode 6 in the electrode holder 7 together with the ring holder 15 and gripping sleeve 18.

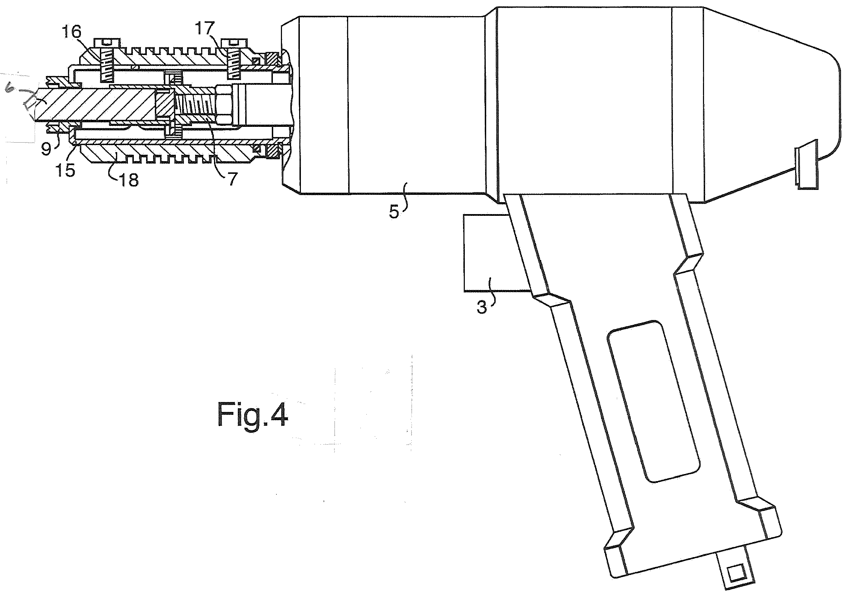

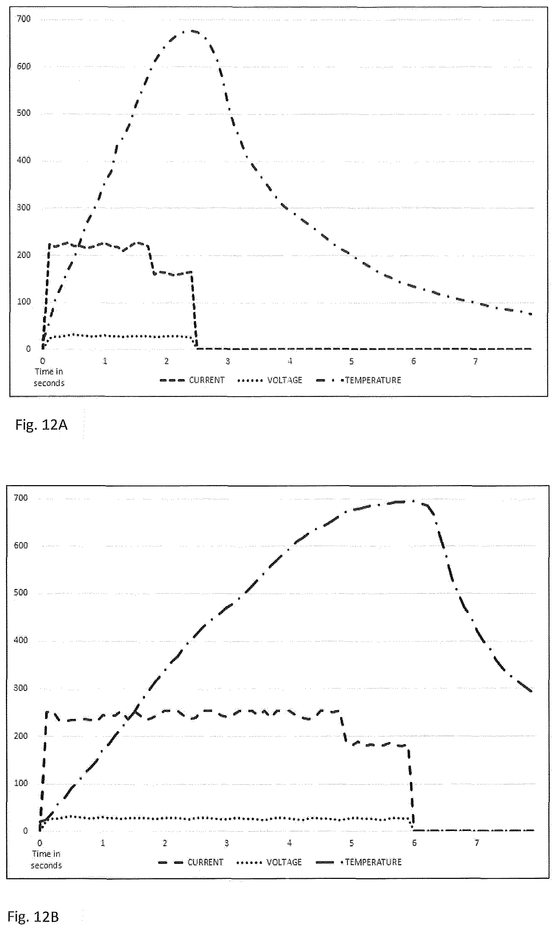

Fig. 4 shows an end part of the brazing gun 5 in section and shows the circuit breaker 3, the carbon electrode 6 in the electrode holder 7 and guard ring 9 of ceramic material in the ring holder 15 together with the gripping sleeve 18, the screw 16 for ejecting the guard ring and the screw 17 for ejecting the electrode. A very important component in the brazing process is the carbon electrode, which forms an electrical resistance, and in which the length, diameter and shape of the carbon electrode influences the electrical resistance in the process. The current strength and the voltage during the brazing procedure are controlled by the control electronics. The control electronics is configured to provide a voltage and a current as a function of time according to Figures 12B, 12C, and 12D to achieve a suitable brazing temperature at the brazing site, see further below.

Fig. 5 shows a brazing gun 5 that is used on a rail 14. An electrically conducting piece 10 in the shape of a cable clip is brazed firmly to the head of the rail. The brazing may also be carried out on the web part or on the foot of the rail.

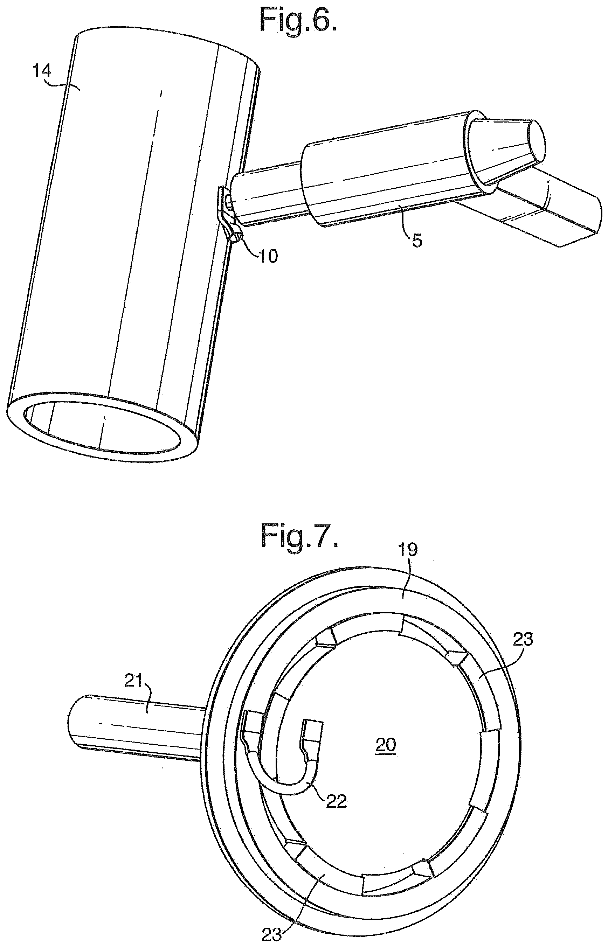

Fig. 6 shows a brazing gun 5 that is used on a workpiece 14 in the form of a section of piping. An electrically conducting connecting piece 10 in the shape of a cable shoe is brazed firmly to the pipe. Stringent requirements apply above all to piping in nuclear power stations, where brazing has to be carried out without causing structural changes in the piping material that could lead to crack formation. In the cases where pipes are filled with gas or oil, and also when they are filled with material that is temperature-sensitive, for example in the chemical industry, it is important to be able to work at low temperatures when brazing.

Fig. 7 shows a railway carriage wheel. An inner wheel 20 is secured to the wheel axle 21 and between the inner wheel and an outer wheel ring 19, the so-called tread, is arranged a damper 23 of for example rubber material. The figure shows how a connecting piece 22 of electrically conducting connecting material joins the inner wheel 20 to the outer wheel ring 19 so that a current can pass from the railway carriage to the railway track. On account of the risk of martensite formation and associated crack formation it has not hitherto been attempted to employ pin brazing in this connection. The present brazing process eliminates martensite formation in any case and enables brazing to be carried out in this field too.

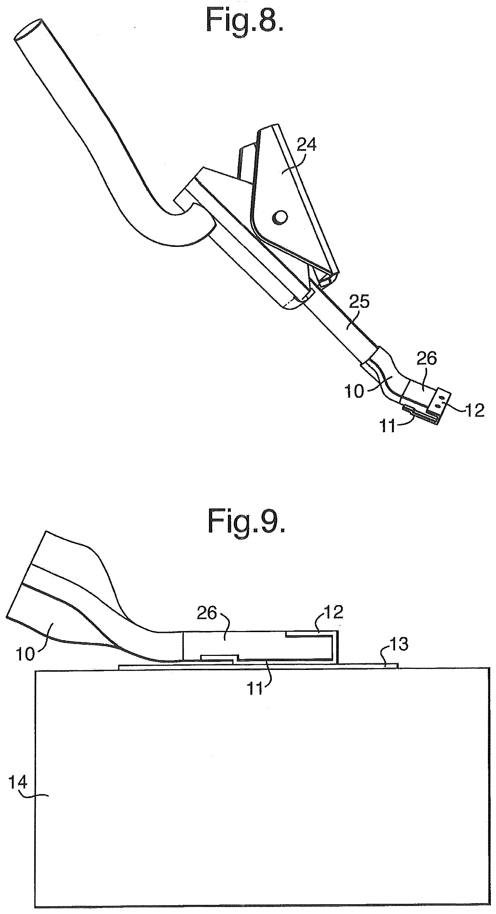

Fig. 8 is a side view of a cable shoe 10, a connecting piece of electrically conducting material, in which a terminal connector 24 to the electrical circuit can be seen. The terminal connector 24 is secured to an electrical cable 25 leading to the cable shoe 10, the other side of which consists of a solid plate 26 of compact material. Around this continuous plate 26 of compact material is arranged a brazing clip 27, which is pressed against the plate 26 of the cable shoe 10 per se during manufacturing, and between the cable shoe 10 and the brazing clip 27 there is provided a flux material 28 that is activated during the brazing process.

Fig. 9 is also a side view of a cable shoe 10 in which the brazing per se is performed on a flat continuous compact plate 26 of the cable shoe 10 by means of the brazing gun 5, and in which can be seen the brazing clip 12, which is pressed against the cable shoe 10, a flux material 11 being heated between the lower side of the cable shoe 10 and the brazing clip 12. Another flux material 13 is provided between the workpiece 14 and the clip 27 and is activated when the brazing clip 27 is heated up and begins to clean the workpiece 14 before brazing of the electrically conducting connecting piece 10.

The brazing clip 12 is of uniform thickness prior to its application to the workpiece to which it is secured. Once the brazing material has been melted by the heat applied through the compact plate 26 of the cable shoe 10 surface tension in the molten material wetting the compact plate 26 and the workpiece 14 leads to a change in thickness, in the sense that the distance between the compact pate 26 and the workpiece, i.e. of the region occupied by the brazing material, is minimised, thus ensuring a firm bond and good electrical and thermal conductivity between the compact plate 26 and the workpiece. The flux material 11 and 13 fulfils the following tasks and has the following properties:
1) cleans the surfaces, 2) removes any oxides present, 3) prevents re-oxidation, 4) is displaced by the molten brazing material, 5) acts as an electrical conductor when the cable shoe 10 is grounded via the rail, 6) facilitates dissipation of heat due to the fact that it has a good thermal conductivity, and 7) wets the surfaces that are to be joined.

Another requirement is that the flux material 28 and 29 should be activated within a specific temperature range. The flux material, brazing material and brazing process must be matched to one another. The flux material is already activated at the start of the brazing process and will continue to be effective until the brazing has been accomplished.

A brazing that is carried out above ca. 500°C is termed hard brazing, as opposed to soft brazing, which takes place at lower temperatures. The brazing material that is used in the brazing process of the present application is intended for hard brazing. However, flux material that is intended for hard brazing is not suitable for the present process since the process takes place too quickly, in about 2 seconds. In the present brazing process, a flux material 10 is used that is normally suitable for soft brazing and accordingly is activated at a lower temperature but does not disintegrate before the brazing is completed due to the short operating time.

In order to reach a necessary brazing temperature but using as little energy as possible a large power input is required over a short period of time. Railway track, thick-walled pipes and similar metal profiles are effective heat sinks. A large power input creates a heat front that moves via the cable shoe down into the rail, where the temperature becomes suitable for hard brazing but does not lead to martensite formation.

The cable shoe 10 is a buffer against local overheating and produces a relatively smooth temperature distribution over the whole molten surface. An indirect heating-up takes place by means of a carbon electrode 6. An electric arc 8 is formed between the carbon electrode 6 and the cable shoe 10. This contrasts with conventional pin brazing, in which an arc acts directly on the rail and/or molten brazing on the rail.

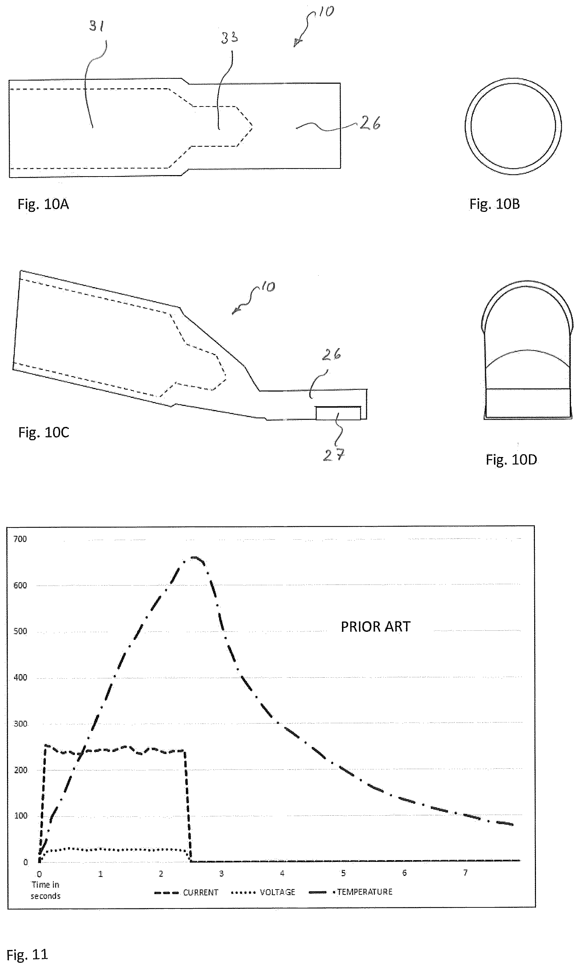

Fig. 10A shows a cable shoe 10 seen from above. A front portion is formed as a compact plate 26 in which a brazing clip 27 is mounted. A dashed line indicates definition of a cable cavity 31 for a cable. The cable shoe 10 is further designed such that the cable cavity 31 is extending into a tapering cavity 33, designed to give the cable shoe 10 a uniform cross section area from the compact plate to the beginning of the fitted cable.

Fig. 10B is a view of the cable shoe of Fig. 10A seen from behind.

Fig. 10 C is a side view of the cable shoe of Fig. 10A, and Fig. 10 D is a front view of the cable shoe of Fig. 10A.

Thus, there is provided a cable shoe for a martensite free brazing, wherein a front portion is formed as a compact plate configured to be brazed into contact with a workpiece, a back end is formed to define a cable cavity for a cable, and wherein the cable shoe is further designed such that the cable cavity is extending into a tapering cavity, designed to give the cable shoe a uniform cross section area along its length from the compact plate to the beginning of the cable cavity. Tests have shown advantageously that cable shoes provided with the extended cavity, reduces the power needed to perform the brazing process. Further, the compact plate of the front portion may be provided with brazing material, such as an amount of silver alloy with or without flux material, that preferably is attached to the compact plate by pressing or by melting. Particularly advantageous is to manufacture the cable shoe by pressing a brazing clip comprising the silver alloy towards the compact plate, thereby attaching it to the compact plate.

With railway signal systems and cathode protection systems that operate at low voltages and currents, it is particularly important to have a low overall transition resistance in the brazed joints 50 as to prevent interference in the system.

With large currents and voltages, a high transition resistance generates heat in the brazed joint, which may damage and/or melt the latter. For this reason, it is important to have a low transition resistance in the brazed joint since the connection also has to handle high return currents in the railway operating system. For a similar reason it is also important that the transition resistance is low in protective groundings.

Fig. 11 is a voltage/current/temperature diagram of a brazing process according to prior art;

Fig. 12A and B is a voltage/current/temperature diagram of the new brazing process. Compared to existing pin brazing, there is no similar large current surge when a short-circuit occurs. Both the voltage and current curves are comparatively more constant over time. The diagram shows that the present invention provides an optimal control of the brazing process. Consequently, the temperatures during the brazing process can also be regulated and controlled, which is a prerequisite for obtaining a martensite-free brazing.

Compared to some prior art martensite free brazing, the apparatus and method of the present invention may include a two-phase process in which voltage is automatically controlled to provide heat using a first electrical power during a first time-portion of the total brazing time, and a second electrical power during a second time-portion of the total brazing time. Preferably, the first electrical power is set to a value in order to rapidly heat up the brazing site, and the second electrical power is lower than the first electrical power, and of a value to maintain the achieved temperature at the brazing site.

Fig. 12A is a voltage/current/temperature diagram of a brazing process according to a new method applied to a first cross section area. A strength of the new method is the ability to achieve brazing of larger cross section areas. The cross-section area brazed and giving rise to the diagram of Fig. 12A is 16 square mm.

Fig. 12B is a current/voltage/temperature diagram of a brazing process according to a new method applied to a second cross section area. The cross-section area brazed and giving rise to the diagram of Fig. 12B is 120 square mm.

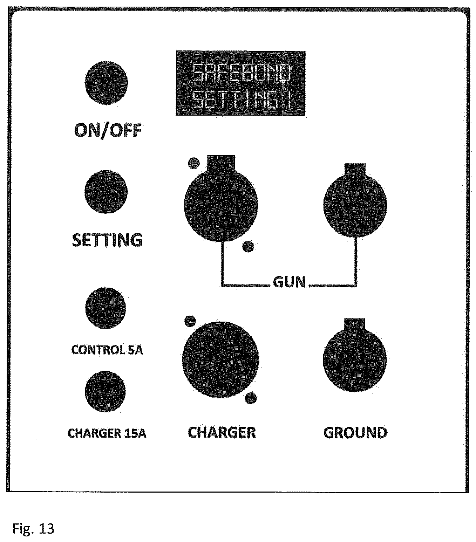

Fig. 13 shows a front view of a principal input panel for entering brazing parameter(s). Input buttons, keys or knobs are provided to enter settings, i.e., by repeatedly pressing a settings button, a list is scrolled to select a setting of a list of predefined settings for different cross section areas, e.g., 10, 16, 25, 35, 50, 70, 95, and 120 square millimetres. The settings may include voltage, and/or current, and time periods for providing a certain volage/current, as further shown in Figs 12A and 12B. The panel further includes a display showing the current setting. The panel further may include, fuses and/or control indicators, and on/off-button. Still further, the input panel may further have sockets for connecting plugs to the brazing gun, for connecting ground, and for connecting a charger for charging the batteries of the brazing apparatus.

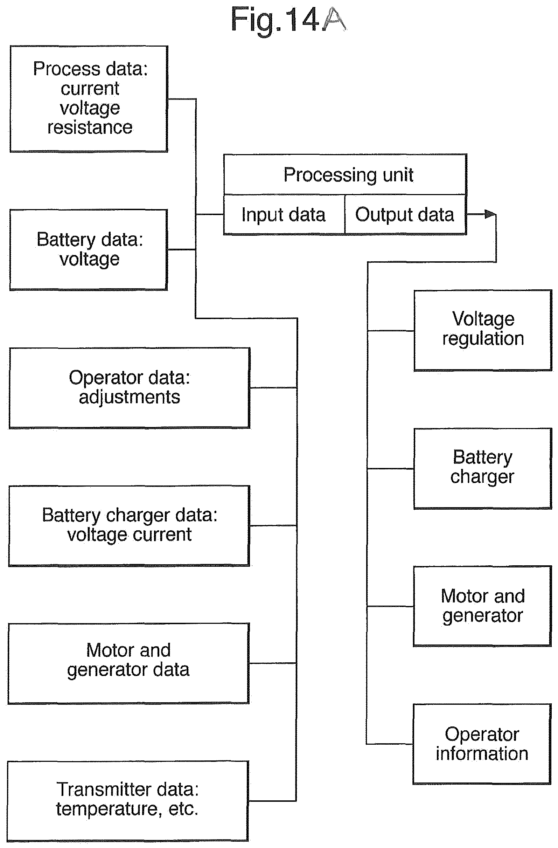

Fig. 14A shows a regulation and control flow diagram of the brazing process.

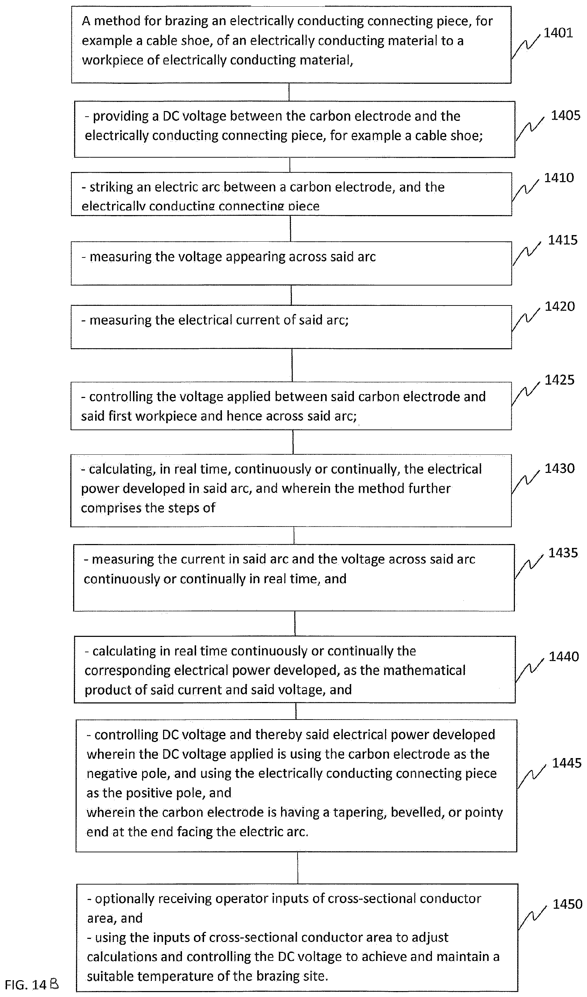

Fig. 14B shows a flowchart of the method steps. There is provided a method for brazing an electrically conducting connecting piece, for example a cable shoe, of an electrically conducting material to a workpiece of electrically conducting material, by means of a temperature controlled brazing process in which the heat necessary for brazing is generated by striking 1410 an electric arc between a carbon electrode, and the electrically conducting connecting piece, the method comprising the steps of:
- providing 1401 an electrically conducting connecting piece, for example a cable shoe;
- providing 1401 a workpiece of electrically conducting material;
- providing 1405 a carbon electrode;
- providing 1405 a DC voltage between the carbon electrode and the electrically conducting connecting piece, for example a cable shoe;
- measuring 1415 the voltage appearing across said arc;
- measuring 1420 the electrical current of said arc;
- controlling 1425 the voltage applied between said carbon electrode and said electrically conducting connecting piece and hence across said arc;
- calculating 1430, in real time, continuously or continually, the electrical power developed in said arc, and wherein the method further comprises the steps of
- measuring 1435 the current in said arc and the voltage across said arc continuously or continually in real time, and
- calculating 1440 in real time continuously or continually the corresponding electrical power developed, as the mathematical product of said current and said voltage, and
- controlling 1445 DC voltage and thereby said electrical power developed

wherein the DC voltage applied is using the carbon electrode as the negative pole, and
using 1445 the electrically conducting connecting piece as the positive pole, and
wherein the carbon electrode is having a tapering, bevelled or pointy end at the end facing the electric arc.

The process may further include the steps of automatically provide heat using a first electrical power during a first time-portion of the total brazing time, and provide a second electrical power during a second time-portion of the total brazing time. Preferably, the first electrical power is set to a value to rapidly heat up the brazing site, and the second electrical power is lower than the first electrical power, and of a value to maintain the achieved temperature at the brazing site.

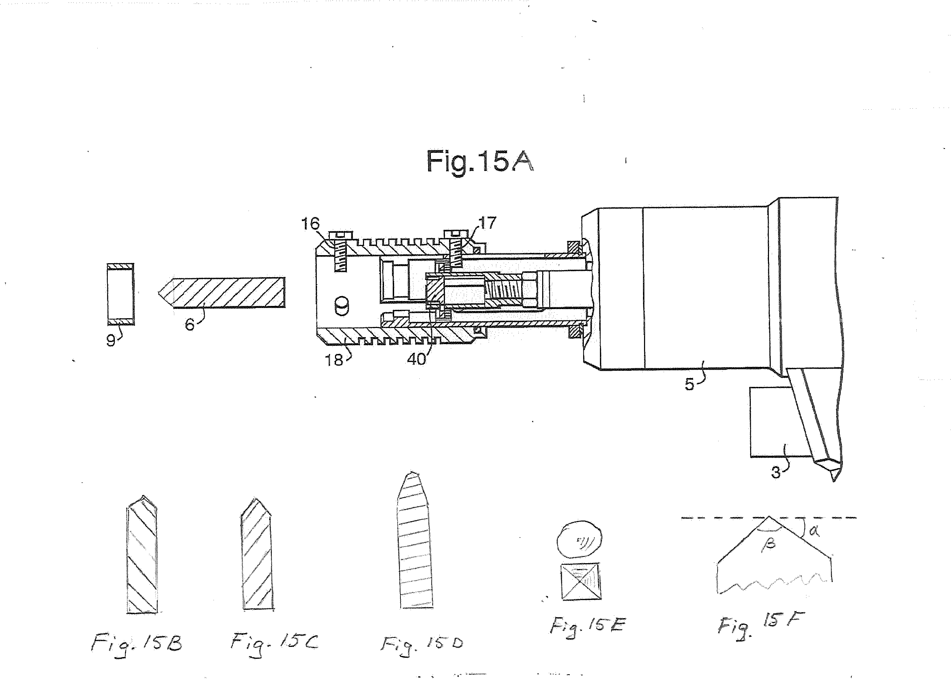

Fig. 15A shows in section the front part of the brazing gun 5 with a gripping sleeve 18 in the retracted position, and an electrode ejector 40 is shown with a screw 16 for a guard ring ejector and a screw 17 for the electrode ejector. The ejected carbon electrode 6 and the ejected guard ring 9 are also shown.

Fig. 15B to 15E shows alternate shapes of the carbon electrode having different top angles Beta and bevel angles Alfa α, as shown in Fig. 15 F. The carbon electrode may be provided with a circular or rectangular, particularly a quadratic section. A circular cross section is preferred. Thus, the carbon electrode is provided with a pointy or bevelled end preferably having a top angle Beta β of between 90 and 150 degrees, and more preferred an angle between 100 and 140, and even more preferred between 110 and 130 degrees, and most preferred between 118 and 122 degrees.

The basic concept of the present invention is to combine various functions and methods in such a way that they co-operate in an improved brazing process. The result of the cooperation is a new brazing process which is free of structural changes or martensite formation which saves energy and also facilitates the brazing of large cross section area of the conductor to be brazed. A carbon electrode is employed in the brazing process whose length and diameter influence the resistance in the electrical circuit and in which the carbon electrode is provided with a pointy or bevelled end, and acts as a temperature buffer and heat distributor. In addition, the electric arc is maintained between the carbon electrode and a smooth end of a cable shoe, see below, which has a stabilising effect on the arc and counteracts the tendency to varying currents over time.

A cable shoe has at least one smooth end of compact, electrically conducting material on which the electric arc from the carbon electrode acts. The lower side of the cable shoe has a clip of brazing material, which is secured during manufacture. The brazing produces a brazed joint of large area, resulting in a lower overall electrical transition resistance. A flux material is present between the cable shoe and the brazing clip, and a flux material is also present between the brazing clip and the workpiece, the flux material, brazing material and brazing process being suitably adapted to one another. The brazing material is suitable for soft brazing and is consequently active over a low temperature range, thereby providing a martensite-free brazing.

The advantages of a guard ring in the brazing process that consists for example of metal or another similar material is that the overall process requires less energy, and also the grounding procedure is facilitated compared to previous procedures. Grounding via the guard ring eliminates the need for special grounding contacts, for example ground terminals or magnetic grounding contacts, as well as the need for special preparation of the grounding carrier. Since in every grounding situation a new guard ring is used, the contact surfaces are always guaranteed to be clean.

The arrangement according to the invention reduces the length of the grounding circuit and eliminates extra transition resistance as well as sources of secondary sparks and arcs between the cable shoe and the workpiece. The shape of the guard ring together with the gripping sleeve shields the operator from electric arcs and hot gases during the brazing process.

The use of metal guard rings influences the brazing procedure by virtue of the fact that it utilises more of the energy released in the form of heat and channels it to the cable shoe.

In order to achieve a satisfactory brazing having regard to temperature, not as much electrical energy has to be supplied therefore to the brazing process.

With previously known methods the total intrinsic resistance in the circuit may be regarded as constant. A lower energy supply should in practice mean a shorter process time. However, the time then becomes far too short for a satisfactory brazing to be achieved.

By regulating the additional resistance and/or regulating the voltage the length of the brazing process can be controlled and, in this way, a satisfactory martensite-free brazing can be achieved with minimal expenditure of energy and in addition the temperature in the base material/workpiece can also be controlled.

With some previously known methods wide margins have been accepted as regards the developed electrical power in the process as well as the total emitted energy and also the overall length of the process. The current was limited either by incorporating a fixed electrical resistance in the circuit, or alternatively by interrupting the process when the necessary amount of emitted energy has been consumed. No account was taken of variations in battery voltage depending on the state of charge of the battery, discharge characteristics or other factors, nor of variations in current during one and the same brazing operation depending on the change in length of the electrode or arc fluctuations, or changes in current between different brazing cases depending on variations in the lifting height. These variations together with simple inadequate arrangements for estimating the amount of energy emitted have resulted in a varying time and varying power output for otherwise comparable brazing processes, as well as difficulties in controlling the temperature in the relevant materials.

In the afore described new brazing process shown in Fig. 14, the brazing temperature and the martensite formation dependent on the latter may be controlled by calculating the electrically developed power and regulating the latter in real time either by an analogue procedure or by a digital procedure with high resolution. The developed power is calculated by instantaneously measuring the current and voltage, and the actual power is calculated as the mathematical product of these quantities. The calculated result is processed and fed into a processing unit whose output signal influences a voltage-regulating unit. In this way the voltage and thereby the current are regulated, and the developed electrical power is adjusted to an appropriate value. The processing unit, which may either exist as a separate unit or may be incorporated in the electronics unit 2, processes data in the form of current and voltage values, data from transmitters and operational adjustments, externally connected units as well as measured elapsed time, and handles this data having regard to physical, mathematical and logic structures in such a way that an appropriate regulation of the developed power takes place over time.

As an example, operator inputs of conductor cross sectional area are used by the processor, which is configured to adjust the control signal to control the voltage to produce a current that produces the right amount of power to heat up and maintain suitable temperature at the brazing.

Also, since the regulation is independent of the resistance of the power circuit there is no need to have a fixed installed resistor, and accordingly there is an energy saving since this resistor produces waste heat. In addition, a larger amount of energy can be withdrawn from the batteries since at the end of the discharge cycle the batteries can still drive the process despite the failing voltage level since there is no fixed resistor. Moreover the formation of the arc at the starting point of the process is facilitated for two reasons, on the one hand because the lifting height of the electrode and thus the length of the arc and consequently the following starting inertia can be minimised without any risk of excessive currents that in some previous methods caused temperature problems and regulating technology problems, and on the other hand much higher current and voltage values than were hitherto possible, are allowed at the starting point of the process without being limited to a fixed resistor, and consequently a reliable start to the process can be ensured.

In the afore described new brazing process the aforementioned processing unit may also be configured to handle signals from external transmitters, for example temperature sensors, as well as operational adjustments whose values affect the output data of the processing unit. In addition, signals from external units such as battery chargers, generators and motors are processed; these signals are also processed in the processing unit when appropriate control signals in the form of output data are produced so as to regulate this kind of unit(s) too.

Only some embodiments of the invention have been illustrated in the drawings, but it should be pointed out that many other modifications can be conceived within the scope of the present invention as defined in the appended claims.

## Claims

1. A method for brazing an electrically conducting connecting piece (10), for example a cable shoe, of an electrically conducting material to a workpiece (14) of electrically conducting material, by means of a temperature controlled brazing process in which the heat necessary for brazing is generated by striking an electric arc (8) between a carbon electrode (6), and the electrically conducting connecting piece (10), the method comprising the steps of:
- providing (1405) a DC voltage between the carbon electrode (6) and the electrically conducting connecting piece (10), for example a cable shoe, wherein the provision of the DC voltage is for generating the electric arc (8), wherein the carbon electrode (6) has a tapering, bevelled or pointy end facing the electric arc (8);
- measuring (1415), continuously or continually in real time, the voltage appearing across said arc (8);
- measuring 1420), continuously or continually in real time, an electrical current of said arc (8);
- calculating (1430), in real time, continuously or continually, the electrical power developed in said arc (8) as the mathematical product of said measured values of the voltage and electrical current;
- controlling (1425) said voltage applied between said carbon electrode (6) and said electrically conducting connecting piece (10), and hence across said arc (8) and thereby said calculated electrical power,
wherein the DC voltage applied is using the carbon electrode (6) as the negative pole, and using the electrically conducting connecting piece (10) as the positive pole.

2. A method according to Claim 1, wherein the method further comprises the steps of
- receiving of operator inputs of cross-sectional conductor area, and
- using the inputs of cross-sectional conductor area to adjust calculations and controlling the DC voltage to achieve and maintain a suitable temperature of the brazing site.

3. A method according to Claim 1 or 2, further including the step of automatically provide heat using a first electrical power during a first time-portion of the total brazing time, and a second electrical power during a second time-portion of the total brazing time.

4. A method according to Claim 1, further including the steps of raising the electrode (6) from the workpiece (14) to strike an electric arc (8) between the electrode (6) and the electrically conducting connecting piece (10).

5. A method according to Claim 1 wherein the pointy, tapering, or bevelled end of the carbon electrode has a top angle of between 90 and 150 degrees, and more preferred a top angle between 100 and 140 degrees, and more preferred between 110 and 130 degrees, and most preferred between 118 and 122 degrees.

6. An apparatus for brazing an electrically conducting connecting piece (10) to a workpiece (14) of electrically conducting material by means of a temperature-controlled brazing process in which the heat necessary for brazing is generated by striking an electric arc (8) between a carbon electrode (6) and the electrically conducting connecting piece (10), the apparatus including:
(a) means for engaging an electrically conducting connecting piece (10) towards a workpiece (14), including a guard ring (9) and a carbon electrode (6), wherein the carbon electrode (6) is provided with a pointy, tapering, or bevelled end at the end facing the electric arc (8);
(b) means for supporting the electrode (6) including means for moving the electrode (6) between a position in which it engages the electrically conducting connecting piece (10) in turn engaged by said means for engaging, and a retracted position in which it is lifted therefrom;
(c) a DC voltage unit (1) for providing and applying a DC voltage of certain polarity between said electrically conducting connecting piece (10) and said carbon electrode (6), and wherein said DC voltage unit (1) includes a voltage regulating unit,
(d) a voltage sensor for measuring said voltage, between the electrically conducting connecting piece (10) and the carbon electrode (6),
(e) a current sensor for measuring the electrical current passing through said carbon electrode (6);
(f) processing means including means for generating an output signal controlling said voltage-regulating unit and further including means for calculating, in real time, continuously or continually, the electrical power developed in said arc (8),
(g) switching means (3) operable to connect said means for applying a voltage in electrical circuit with said electrode (6) and with such electrically conducting connecting piece (10) whereby, when said means for engaging is applied, and the switching means (3) is operated to close said electrical circuit, said means for supporting and moving raises the electrode (8) from the workpiece (14) to strike an electric arc (8) between the electrode (6) and the electrically conducting connecting piece (10), and
(i) wherein the DC voltage unit (1) is configured such that the certain polarity being that the DC voltage applied is using the carbon electrode (6) as the negative pole, and using the electrically conducting connecting piece (8) as the positive pole.

7. Apparatus according to Claim 6, wherein the processing means is configured to control the voltage-regulating unit so as to automatically provide heat using a first electrical power during a first time-portion of the total brazing time, and a second electrical power during a second time-portion of the total brazing time.

8. Apparatus according to claim 7, wherein the first electrical power is set to a value in order to rapidly heat up the brazing site, and wherein the processing means is configured to calculate a value of the second electrical power, that is lower than the first electrical power, to maintain the achieved temperature at the brazing site.

9. Apparatus according to claim 6, wherein the apparatus is provided with input organs to set appropriate parameters for the electrical cross section area of the conductor to be brazed, and
wherein the processor is configured to calculate time and voltage for the brazing, taking into account the parameters to provide appropriate voltage and time to accomplish a suitable amount of heat during an appropriate length of time.

10. Apparatus according to claim 7, 8 or 9 including a gripping sleeve (18) around said guard ring (9), whereby the guard ring (9) together with gripping sleeve (18) shields the operator from the arc (8) and from hot gases.

11. Apparatus according to claim 10 in which the gripping sleeve (18) ejects with a longitudinal movement spent electrodes (6) and guard rings (9).

12. Apparatus according to any of claims 6 to 11, wherein said processing means is additionally capable of controlling external units such as battery chargers, generators, and motors in order to regulate these units.

13. An apparatus according to any of claims 6 to 12, wherein the pointy, tapering, or bevelled end of the carbon electrode has a top angle of between 90 and 150 degrees, preferably between 100 and 140 degrees, and even more preferably between 110 and 130 degrees, and most preferably between 118 and 122 degrees.

14. Combination of an apparatus according to any of claims 6 to 13 with an electrically conducting connecting piece (10) for brazing to a workpiece (14), the electrically conducting connecting piece (10) having on one side a layer of brazing metal (12), with a flux layer (13) between the workpiece (14) and the layer of brazing metal (12).

15. The combination of claim 14, in which the layer of brazing metal (12) is provided by a brazing clip applied to said workpiece (14).

16. The combination of claim 15 including an electrical connection to the connecting piece (10) to provide a grounding contact for the apparatus.

## Patentansprüche

1. Verfahren zum Löten eines elektrisch leitfähigen Verbindungsstücks (10), beispielsweise eines Kabelschuhs, aus einem elektrisch leitfähigen Material an ein Werkstück (14) aus elektrisch leitfähigem Material, mittels eines temperaturgesteuerten Lötprozesses, bei dem die zum Löten erforderliche Wärme durch Zünden eines Lichtbogens (8) zwischen einer Kohleelektrode (6) und dem elektrisch leitfähigen Verbindungsstück (10) erzeugt wird, das Verfahren umfassend die Schritte:
- Bereitstellen (1405) einer Gleichspannung zwischen der Kohleelektrode (6) und dem elektrisch leitfähigen Verbindungsstück (10), zum Beispiel einem Kabelschuh, wobei die Bereitstellung der Gleichspannung zum Erzeugen des Lichtbogens (8) dient, wobei die Kohleelektrode (6) ein sich verjüngendes, abgeschrägtes oder spitzes Ende, das dem Lichtbogen (8) zugewandt ist, aufweist;
- Messen (1415), kontinuierlich oder fortlaufend in Echtzeit, der Spannung, die über dem Bogen (8) auftritt;
- Messen 1420), kontinuierlich oder fortlaufend in Echtzeit, eines elektrischen Stroms des Bogens (8);
- Berechnen (1430), in Echtzeit, kontinuierlich oder fortlaufend, der elektrischen Leistung, die in dem Bogen (8) entwickelt wird, als das mathematische Produkt der gemessenen Werte der Spannung und des elektrischen Stroms;
- Steuern (1425) der Spannung, die zwischen der Kohleelektrode (6) und dem elektrisch leitfähigen Verbindungsstück (10) und somit über den Bogen (8) angelegt wird, und dadurch der berechneten elektrischen Leistung,
wobei die angelegte Gleichspannung die Kohleelektrode (6) als den negativen Pol verwendet und das elektrisch leitfähige Verbindungsstück (10) als den positiven Pol verwendet.

2. Verfahren nach Anspruch 1, wobei das Verfahren ferner die Schritte umfasst
- Empfangen von Bedienereingaben einer Leiterquerschnittsfläche und
- Verwenden der Eingaben der Leiterquerschnittsfläche, um Berechnungen anzupassen, und Steuern der Gleichspannung, um eine geeignete Temperatur der Lötstelle zu erreichen und aufrechtzuerhalten.

3. Verfahren nach Anspruch 1 oder 2, das ferner den Schritt eines automatischen Bereitstellens von Wärme unter Verwendung einer ersten elektrischen Leistung während eines ersten Zeitabschnitts der gesamten Lötzeit und einer zweiten elektrischen Leistung während eines zweiten Zeitabschnitts der gesamten Lötzeit einschließt.

4. Verfahren nach Anspruch 1, das ferner die Schritte eines Anhebens der Elektrode (6) von dem Werkstück (14) einschließt, um einen Lichtbogen (8) zwischen der Elektrode (6) und dem elektrisch leitfähigen Verbindungsstück (10) zu zünden.

5. Verfahren nach Anspruch 1, wobei das spitze, sich verjüngende oder abgeschrägte Ende der Kohleelektrode einen oberen Winkel zwischen 90 und 150 Grad, und mehr bevorzugt einen oberen Winkel zwischen 100 und 140 Grad, und mehr bevorzugt zwischen 110 und 130 Grad, und am meisten bevorzugt zwischen 118 und 122 Grad, aufweist.

6. Einrichtung zum Löten eines elektrisch leitfähigen Verbindungsstücks (10) an ein Werkstück (14) aus elektrisch leitfähigem Material mittels eines temperaturgesteuerten Lötprozesses, bei dem die zum Löten erforderliche Wärme durch Zünden eines Lichtbogens (8) zwischen einer Kohleelektrode (6) und dem elektrisch leitfähigen Verbindungsstück (10) erzeugt wird, wobei die Einrichtung einschließt:
(a) ein Mittel zum Ineingriffnehmen eines elektrisch leitfähigen Verbindungsstücks (10) in Richtung eines Werkstücks (14), das einen Schutzring (9) und eine Kohleelektrode (6) einschließt, wobei die Kohleelektrode (6) mit einem spitzen, sich verjüngenden oder abgeschrägten Ende an dem Ende, das dem Lichtbogen (8) zugewandt ist, bereitgestellt ist;
(b) ein Mittel zum Tragen der Elektrode (6), das ein Mittel zum Bewegen der Elektrode (6) zwischen einer Position, in der sie das elektrisch leitfähige Verbindungsstück (10) in Eingriff nimmt, das wiederum durch das Mittel zum Ineingriffnehmen in Eingriff genommen wird, und einer zurückgezogenen Position einschließt, in der sie davon abgehoben wird;
(c) eine Gleichspannungseinheit (1) zum Bereitstellen und Anlegen einer Gleichspannung einer bestimmten Polarität zwischen dem elektrisch leitfähigen Verbindungsstück (10) und der Kohleelektrode (6), und wobei die Gleichspannungseinheit (1) eine Spannungsregeleinheit einschließt,
(d) einen Spannungssensor zum Messen der Spannung zwischen dem elektrisch leitfähigen Verbindungsstück (10) und der Kohleelektrode (6),
(e) einen Stromsensor zum Messen des durch die Kohleelektrode (6) hindurchfließenden elektrischen Stroms;
(f) ein Verarbeitungsmittel, das ein Mittel zum Erzeugen eines Ausgangssignals, das die Spannungsregeleinheit steuert, einschließt und ferner ein Mittel zum Berechnen, in Echtzeit, kontinuierlich oder fortlaufend, der elektrischen Leistung, die in dem Bogen (8) entwickelt wird, einschließt,
(g) ein Schaltmittel (3), das betriebsfähig ist, um das Mittel zum Anlegen einer Spannung in einem elektrischen Schaltkreis mit der Elektrode (6) und mit einem derartigen elektrisch leitfähigen Verbindungsstück (10) zu verbinden, wodurch, wenn das Mittel zum Ineingriffnehmen angelegt wird und das Schaltmittel (3) betrieben wird, um den elektrischen Schaltkreis zu schließen, das Mittel zum Tragen und Bewegen die Elektrode (8) von dem Werkstück (14) anhebt, um einen Lichtbogen (8) zwischen der Elektrode (6) und dem elektrisch leitfähigen Verbindungsstück (10) zu zünden, und
(i) wobei die Gleichspannungseinheit (1) derart konfiguriert ist, dass die bestimmte Polarität die ist, bei der die angelegte Gleichspannung die Kohleelektrode (6) als den negativen Pol verwendet und das elektrisch leitfähige Verbindungsstück (8) als den positiven Pol verwendet.

7. Einrichtung nach Anspruch 6, wobei das Verarbeitungsmittel konfiguriert ist, um die Spannungsregeleinheit zu steuern, um Wärme unter Verwendung einer ersten elektrischen Leistung während eines ersten Zeitabschnitts der gesamten Lötzeit und einer zweiten elektrischen Leistung während eines zweiten Zeitabschnitts der gesamten Lötzeit automatisch bereitzustellen.

8. Einrichtung nach Anspruch 7, wobei die erste elektrische Leistung auf einen Wert eingestellt ist, um die Lötstelle schnell aufzuwärmen, und wobei das Verarbeitungsmittel konfiguriert ist, um einen Wert der zweiten elektrischen Leistung zu berechnen, der niedriger als die erste elektrische Leistung ist, um die erreichte Temperatur an der Lötstelle aufrechtzuerhalten.

9. Einrichtung nach Anspruch 6, wobei die Einrichtung mit Eingabeorganen bereitgestellt ist, um angemessene Parameter für die elektrische Querschnittsfläche des zu lötenden Leiters einzustellen, und
wobei der Prozessor konfiguriert ist, um Zeit und Spannung für das Löten zu berechnen, wobei die Parameter berücksichtigt werden, um angemessene Spannung und Zeit bereitzustellen, um eine geeignete Wärmemenge während einer angemessenen Zeitdauer zu erreichen.

10. Einrichtung nach Anspruch 7, 8 oder 9, die eine Greifhülse (18) um den Schutzring (9) herum einschließt, wobei der Schutzring (9) zusammen mit der Greifhülse (18) den Bediener vor dem Bogen (8) und vor heißen Gasen abschirmt.

11. Einrichtung nach Anspruch 10, bei der die Greifhülse (18) mit einer Längsbewegung verbrauchte Elektroden (6) und Schutzringe (9) ausstößt.

12. Einrichtung nach einem der Ansprüche 6 bis 11, wobei das Verarbeitungsmittel zusätzlich zum Steuern externer Einheiten wie Batterieladegeräten, Generatoren und Motoren imstande ist, um diese Einheiten zu regeln.

13. Einrichtung nach einem der Ansprüche 6 bis 12, wobei das spitze, sich verjüngende oder abgeschrägte Ende der Kohleelektrode einen oberen Winkel zwischen 90 und 150 Grad, vorzugsweise zwischen 100 und 140 Grad, und noch mehr bevorzugt zwischen 110 und 130 Grad, und am meisten bevorzugt zwischen 118 und 122 Grad, aufweist.

14. Kombination einer Einrichtung nach einem der Ansprüche 6 bis 13 mit einem elektrisch leitfähigen Verbindungsstück (10) zum Löten an ein Werkstück (14), wobei das elektrisch leitfähige Verbindungsstück (10) auf einer Seite eine Schicht aus Lötmetall (12) aufweist, mit einer Flussmittelschicht (13) zwischen dem Werkstück (14) und der Schicht aus Lötmetall (12).

15. Kombination nach Anspruch 14, bei der die Schicht aus Lötmetall (12) durch eine Lötklammer, die an dem Werkstück (14) angebracht ist, bereitgestellt ist.

16. Kombination nach Anspruch 15, die eine elektrische Verbindung mit dem Verbindungsstück (10) einschließt, um einen Erdungskontakt für die Einrichtung bereitzustellen.

## Revendications

1. Procédé de brasage d'une pièce de connexion électriquement conductrice (10), par exemple une cosse de câble, d'un matériau électriquement conducteur à une pièce à usiner (14) de matériau électriquement conducteur, au moyen d'un processus de brasage à température contrôlée dans lequel la chaleur nécessaire au brasage est générée par la frappe d'un arc électrique (8) entre une électrode de carbone (6) et la pièce de connexion électroconductrice (10), le procédé comprenant les étapes consistant à :
- fournir (1405) une tension continue entre l'électrode de carbone (6) et la pièce de connexion électroconductrice (10), par exemple un sabot de câble, dans lequel la fourniture de la tension continue est destinée à générer l'arc électrique (8), dans lequel l'électrode de carbone (6) a une extrémité effilée, biseautée ou pointue faisant face à l'arc électrique (8) ;
- mesurer (1415), en permanence et en continu en temps réel, la tension apparaissant à travers ledit arc (8) ;
- mesurer (1420), en permanence et en continu en temps réel, un courant électrique dudit arc (8) ;
- calculer (1430), en temps réel, en permanence et en continu, la puissance électrique développée dans ledit arc (8) en tant que produit mathématique desdites valeurs mesurées de la tension et du courant électrique ;
- commander (1425) ladite tension appliquée entre ladite électrode de carbone (6) et ladite pièce de connexion électroconductrice (10), et donc à travers ledit arc (8) et ainsi ladite puissance électrique calculée,
dans lequel la tension continue appliquée utilise l'électrode de carbone (6) comme pôle négatif et utilise la pièce de connexion électroconductrice (10) comme pôle positif.

2. Procédé selon la revendication 1, dans lequel le procédé comprend en outre les étapes consistant à
- recevoir des entrées d'opérateur de surface de conducteur en section transversale, et
- utiliser les entrées de section transversale de surface conductrice pour ajuster les calculs et la commande de la tension continue pour atteindre et maintenir une température appropriée du site de brasage.

3. Procédé selon la revendication 1 ou 2, comportant en outre l'étape consistant à fournir automatiquement de la chaleur à l'aide d'une première puissance électrique pendant une première partie temporelle du temps total de brasage, et d'une seconde puissance électrique pendant une seconde partie temporelle du temps total de brasage.

4. Procédé selon la revendication 1, comportant en outre les étapes consistant à soulever l'électrode (6) de la pièce à usiner (14) pour former un arc électrique (8) entre l'électrode (6) et la pièce de connexion électriquement conductrice (10).

5. Procédé selon la revendication 1, dans lequel l'extrémité pointue, effilée ou biseautée de l'électrode de carbone présente un angle supérieur compris entre 90 et 150 degrés, et plus préférablement un angle supérieur entre 100 et 140 degrés, et plus préférablement entre 110 et 130 degrés, et le plus préférablement entre 118 et 122 degrés.

6. Appareil permettant de braser une pièce de liaison électroconductrice (10) à une pièce à usiner (14) de matériau électroconducteur au moyen d'un procédé de brasage à température contrôlée dans lequel la chaleur nécessaire au brasage est générée par la frappe d'un arc électrique (8) entre une électrode de carbone (6) et la pièce de liaison électroconductrice (10), l'appareil comportant :
(a) un moyen pour venir en prise avec une pièce de connexion électroconductrice (10) en direction d'une pièce à usiner (14), comportant un anneau de garde (9) et une électrode en carbone (6), dans lequel l'électrode de carbone (6) est pourvue d'une extrémité pointue, effilée ou biseautée à l'extrémité faisant face à l'arc électrique (8) ;
(b) un moyen de support de l'électrode (6) comportant un moyen pour déplacer l'électrode (6) entre une position dans laquelle elle vient en prise avec la pièce de connexion électroconductrice (10) à son tour mise en prise par ledit moyen de mise en prise, et une position rétractée dans laquelle elle est soulevée de celle-ci ;
(c) une unité de tension continue (1) pour fournir et appliquer une tension continue d'une certaine polarité entre ladite pièce de connexion électroconductrice (10) et ladite électrode en carbone (6), et dans lequel ladite unité de tension continue (1) comporte une unité de régulation de tension,
(d) un capteur de tension pour mesurer ladite tension, entre la pièce de connexion électroconductrice (10) et l'électrode en carbone (6),
(e) un capteur de courant pour mesurer le courant électrique traversant ladite électrode de carbone (6) ;
(f) un moyen de traitement comportant un moyen pour générer un signal de sortie commandant ladite unité de régulation de tension et comportant en outre un moyen permettant de calculer, en temps réel, en permanence ou en continu, la puissance électrique développée dans ledit arc (8),
(g) un moyen de commutation (3) fonctionnel pour connecter ledit moyen d'application d'une tension dans un circuit électrique avec ladite électrode (6) et avec une telle pièce de connexion électriquement conductrice (10), selon lequel, lorsque ledit moyen de mise en prise est appliqué et que le moyen de commutation (3) est actionné pour fermer ledit circuit électrique, ledit moyen de support et de déplacement soulève l'électrode (8) de la pièce à usiner (14) pour frapper un arc électrique (8) entre l'électrode (6) et le pièce de liaison conductrice (10), et
(i) dans lequel l'unité de tension continue (1) est configurée de telle sorte que la certaine polarité étant que la tension continue appliquée utilise l'électrode de carbone (6) comme pôle négatif, et utilise la pièce de connexion électroconductrice (8) comme pôle positif.

7. Appareil selon la revendication 6, dans lequel le moyen de traitement est configuré pour commander l'unité de régulation de tension de manière à fournir automatiquement de la chaleur à l'aide d'une première puissance électrique pendant une première partie de temps du temps de brasage total, et d'une seconde puissance électrique pendant une seconde partie de temps du temps de brasage total.

8. Appareil selon la revendication 7, dans lequel la première puissance électrique est réglée sur une valeur afin de chauffer rapidement le site de brasage, et dans lequel le moyen de traitement est configuré pour calculer une valeur de la seconde puissance électrique, qui est inférieure à la première puissance électrique, afin de maintenir la température obtenue au niveau du site de brasage.

9. Appareil selon la revendication 6, dans lequel l'appareil est pourvu d'organes d'entrée pour régler des paramètres appropriés pour la section transversale électrique du conducteur à braser, et
dans lequel le processeur est configuré pour calculer le temps et la tension pour le brasage, en tenant compte des paramètres pour fournir une tension et un temps appropriés afin d'accomplir une quantité appropriée de chaleur pendant une durée de temps appropriée.

10. Appareil selon la revendication 7, 8 ou 9, comportant un manchon de préhension (18) autour de ladite bague de protection (9), selon lequel la bague de protection (9) conjointement avec le manchon de préhension (18) protègent l'opérateur de l'arc (8) et des gaz chauds.

11. Appareil selon la revendication 10, dans lequel le manchon de préhension (18) éjecte avec un mouvement longitudinal des électrodes (6) et des bagues de protection (9) usagées.

12. Appareil selon l'une quelconque des revendications 6 à 11, dans lequel ledit moyen de traitement est en outre capable de commander des unités externes telles que des chargeurs de batterie, des générateurs et des moteurs afin de réguler ces unités.

13. Appareil selon l'une quelconque des revendications 6 à 12, dans lequel l'extrémité pointue, effilée ou biseautée de l'électrode de carbone a un angle supérieur compris entre 90 et 150 degrés, de préférence entre 100 et 140 degrés, et encore plus préférablement entre 110 et 130 degrés, et le plus préférablement entre 118 et 122 degrés.

14. Combinaison d'un appareil selon l'une quelconque des revendications 6 à 13 avec une pièce de connexion électroconductrice (10) pour le brasage à une pièce à usiner (14), la pièce de connexion électriquement conductrice (10) ayant d'un côté une couche de métal de brasage (12), avec une couche de flux (13) entre la pièce à usiner (14) et la couche de métal de brasage (12).

15. Combinaison selon la revendication 14, dans laquelle la couche de métal de brasage (12) est fournie par une pince de brasage appliquée à ladite pièce à usiner (14).

16. Combinaison selon la revendication 15, comportant une connexion électrique à la pièce de connexion (10) pour fournir un contact de mise à la terre pour l'appareil.
